# EUROPEAN PATENT SPECIFICATION

(11) **EP 3 950 195 B1**
(45) Date of publication and mention of the grant of the patent: **16.08.2023**
(21) Application number: 21187519.0
(22) Date of filing: 23.07.2021
(51) Int. Cl.: B23B 51/04, B23D 47/02, B23D 47/08, B23D 45/00, B27B 5/12

(54) **GUIDE DEVICE FOR A HOLE SAW**
FÜHRUNGSVORRICHTUNG FÜR EINE LOCHSÄGE
DISPOSITIF DE GUIDE POUR UNE SCIE-CLOCHE

(30) Priority: 04.08.2020 IT 202000019114
(43) Date of publication of application: 09.02.2022
(73) Proprietor: Scalco, Nicola, 36072 Vicenza (IT)
(72) Inventor: Scalco, Nicola, 36072 Vicenza (IT)
(74) Representative: Bettello, Pietro

(56) References cited:
- FR-A1- 2 334 478
- NO-B1- 341 270
- US-A1- 2009 279 968

## Description

The present invention relates to a guide device for a hole saw, according to the preamble of claim 1.

As is known, a hole saw consists of a hollow metal cylinder, usually made of steel, which has a cutting end provided with teeth. Such saws are used to cut circular holes in materials such as wood, plastic, plaster and similar materials which are not too thick, as the cutting depth they can reach is limited by the same height of the cylinder composing them.

Said saws are usually fixed to a drill and spun at high speed to cut a workpiece, creating a peripheral hole therein of the same diameter as the saw. The saw can advantageously be provided with a bit for making a centring hole; thereby the user can use said bit to place the centre of the hole to be made in the correct position.

Obviously, once the saw has completely passed through the material to be processed for its entire thickness, the cylindrical element formed inside the peripheral hole by the action of the saw, no longer being connected in any way to the material to be processed, becomes detached, giving rise to a through hole.

However, it often occurs that the previously made hole must be enlarged at a later date and it is clear that in this case it is not possible to use the bit guide, as there is no element on which to insert it because the hole is already present. It is therefore extremely difficult to drill a new hole concentric to the first one, which can lead to serious construction problems.

In the case of holes in metal materials, more elaborate processing is required, using cylindrical guide elements to be centred in the existing hole, and carrying out the modification using a plasma cutter with subsequent edge finishing using a deburring milling cutter. Instead on wood and concrete, guide holes should be made around the circumference of the desired hole, previously delimited by a tracing on the material. The number of guide holes should be such that the excess material can be detached; however, with this method the edges of the hole would be extremely undulated due to the guide holes and therefore it is specifically necessary to always finish them with a deburring milling cutter. This results in a considerable loss of time and a potential safety risk due to burrs or fragments created by the finishing milling cutter.

In order to solve these problems, it is usual to fix a guide device to the hole saw, usually consisting of a cylinder protruding from the toothed end of the saw. This guide device has a diameter equal to that of the existing hole, so that it fits perfectly therein and acts as a centring device for the new hole.

Various embodiments of hole saws provided with these guide devices are described in patent documents US3684393, US4968189, US5820315, US2010303567, US2015336183 and US2019091776.

However, the most important state of the art document is the patent No. NO341270B1 of 2017, which illustrates a guide device for a hole saw (the numbers refer to this document), comprising a central rod (44), a pair of pins (43) threaded onto said central rod, a plurality of arms (46); said arms (46) are arranged in a substantially radially aligned manner with respect to the central rod (22). In said device there is also a plurality of guide bars (49) of the same number as the plurality of pairs of arms (46).

Other significant documents of the state of the art are: US2009/279968A1 and FR2334478A1.

It is clear that these types of guide devices are not extremely versatile, as they have a fixed, non-changeable diameter which, for the device to function correctly, must be essentially identical to that of the hole already drilled. To change the size of the guide device, it is necessary to physically replace it with another with a different diameter. This procedure, as well as being time-consuming for the user, increases the cost and difficulty of implementation, since the more freedom desired in selecting the size of the holes, the more guide devices must be made.

Object of the present invention is to provide a guide device for hole saws with adjustable dimensions and which is able to solve the above-mentioned problems.

This is achieved, according to the invention, by conforming said device to the features of claim 1. Further features of the invention are described in the dependent claims.

These and further features of the invention will now be described in detail hereinafter with reference to some particular embodiments thereof, given solely by way of nonlimiting example, with the aid of the attached drawings, in which:
- Fig. 1 shows a front view of a particular embodiment of the guide device according to the invention, on which the hole saw is not mounted;
- Fig. 2 shows a side view of said particular embodiment of the guide device according to the invention;
- Fig. 3 shows a plan view of said particular embodiment of the guide device according to the invention;
- Fig. 4 shows an example of the use of the guide device according to the invention.

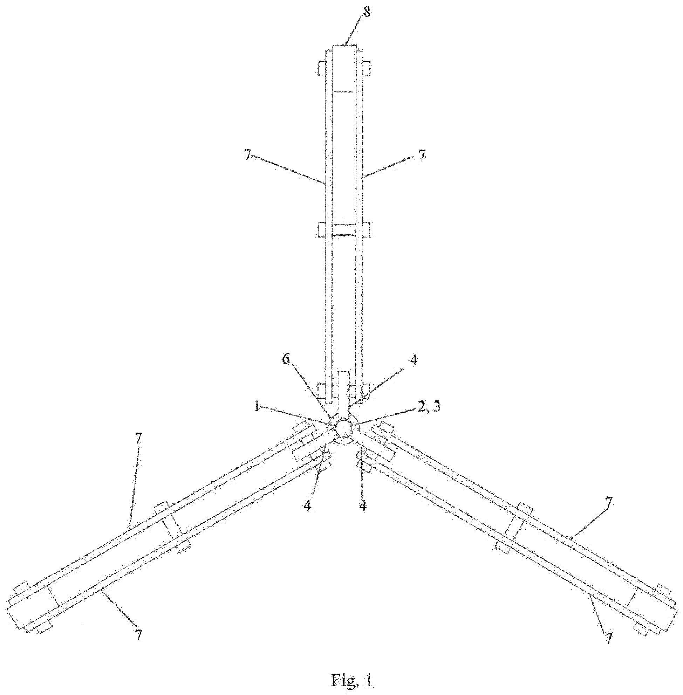

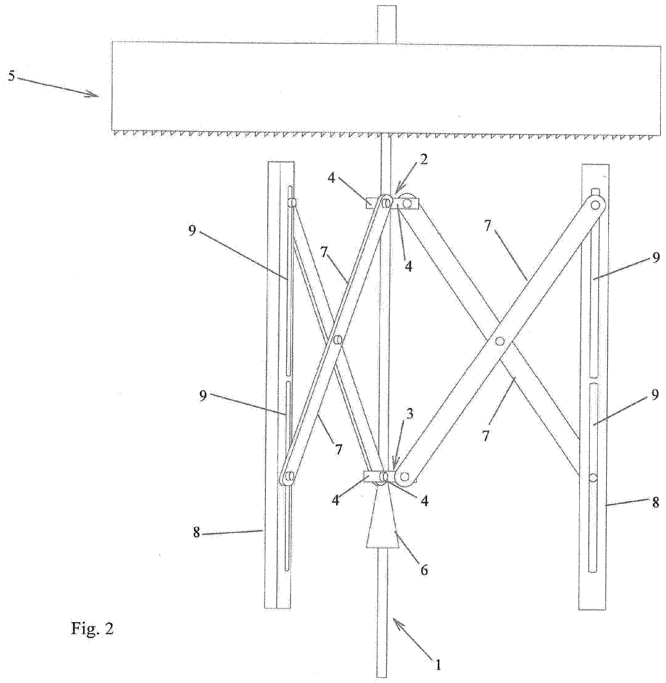

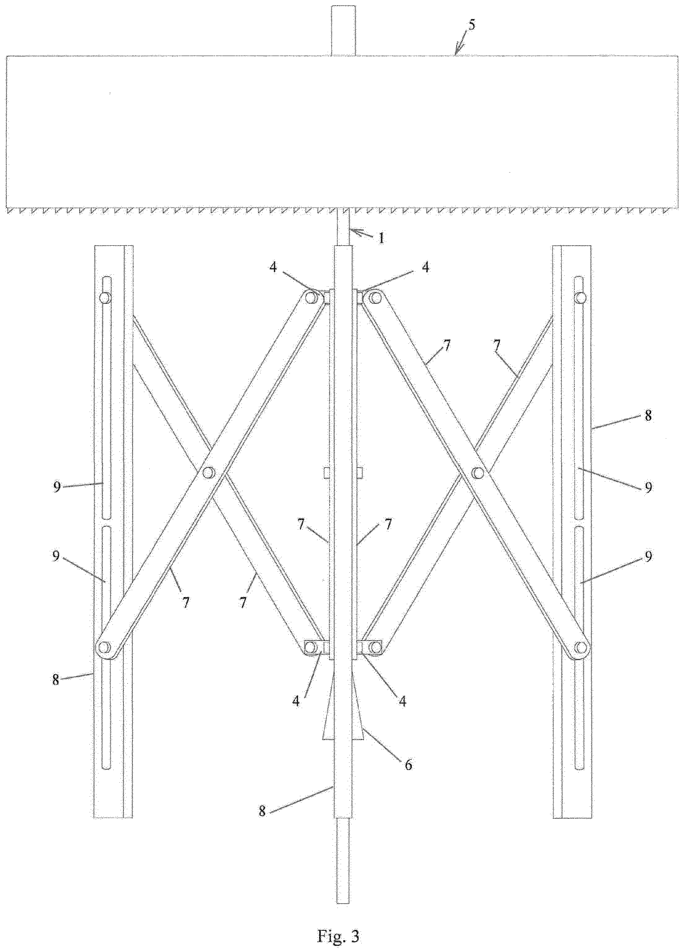

As shown in figures 1-3, in a preferred embodiment the device according to the invention comprises a threaded central rod 1, on which a fixed pin 2 and a mobile pin 3 are threaded, each having a plurality of wings 4 mutually radially spaced by 120°; each of the wings 4 of the fixed pin 2 is radially aligned with the respective wing 4 of the mobile pin 3.

The central structure of said pins advantageously consists of a hollow cylinder, the inner surface of which is threaded so as to couple with the central rod 1.

Said fixed pin 2 is advantageously idle with respect to the central rod 1 and is held in position by means of stop elements which are appropriately fixed on the central rod 1, for example by welding.

Said mobile pin 3 can instead slide forwards and backwards along the central rod 1, taking advantage of the threaded coupling.

One end of the central rod 1 is arranged to receive a hole saw 5 by means of a removable coupling consisting of, for example, a shaft for hole saws.

It is provided that at each wing 4, one end of an arm 7 is hinged, which extends substantially coplanar to the longitudinal axis of the central rod. It is evident that since the wings 4 of each pin are radially aligned, the arms 7 hinging thereon will also be radially aligned, thus constituting three pairs of radially aligned arms 7.

The further ends of each pair of radially aligned arms 7 are respectively slidingly hinged at two slots 9, in turn provided on a further guide bar 8, so as to place the arms 7 in an X-shaped configuration. Said guide bar 8 extends substantially parallel to the longitudinal axis of the central rod 1 and the total number of guide bars 8 is equal to the number of pairs of arms 7.

By virtue of the X-shaped configuration of the arms 7, the user is able to adjust the distance of the guide bars with respect to the central rod 1, simply by varying the position of the mobile pin 3 with respect to the fixed pin 2. This is advantageously achieved by rotating the central rod 1 which, by means of its threading, will slide said mobile pin 3 forwards and backwards, modifying the geometry of the arms 7 and the guide bars 8.

It is advantageously provided that said mobile pin 3, once the adjustment has been carried out, is held in position by a locking element 6 consisting of a hollow threaded cone screwed starting from the end of the central rod closest to the mobile pin 3 and adapted to rest against the pin, in order to retain it in position.

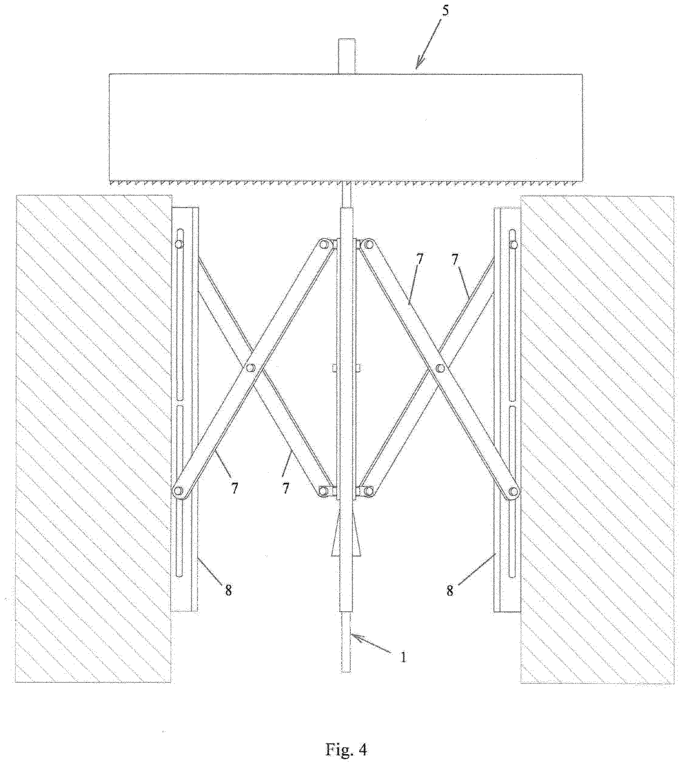

Fig. 4 shows that to use the device referred to above, it is sufficient to adjust the position of the mobile pin 3 until the guide bars 8 are in contact with the walls of the hole to be enlarged. Thereby, the hole saw 5 fixed to the rod 1 will be centred on the hole and, by means of a rotating device, such as a drill, it will be possible to rotate said saw to obtain the desired enlarged hole. It can also be seen that the guide device can be used as long as the distance of the guide bars 8 from the central rod 1 is smaller than the radius of the hole saw used.

In order for the present invention to allow a correct centring of the hole to be drilled, it must be advantageously provided that said guide arms 8 are radially arranged so that their ends coincide with the vertices of an imaginary regular polygon. Therefore, extrapolating a general rule, if N guide arms 8 are available, they must be mutually radially spaced by an angle of 360/N.

It is obvious that, in the light of the present description, those skilled in the art can make variations to the design of the present invention, for example by changing the number of wings 4 and consequently of arms 7 and of guide bars 8; however, such variations are always to be considered within the scope of the present invention, defined by the following claims.

## Claims

1. GUIDE DEVICE FOR A HOLE SAW, comprising:
- a central rod (1);
- a pair of pins threaded onto said central rod (1);
- a plurality of arms (7);
wherein the arms (7) being parts of a pair are arranged substantially radially aligned with respect to the central rod (1);
the guide device further comprising
a plurality of guide bars (8) of the same number as the plurality of pairs of arms (7);
**characterised in that**
the plurality of guide bars (8) comprises at least one slot (9), at which the further ends of the pairs of arms (7) are hinged; **in that**
the arms (7) are arranged with an X-shaped configuration; **in that**
the pair of pins is retained onto said central rod (1) by means of a coupling adapted to allow the variation of their mutual distance; **in that**
the plurality of arms (7) is arranged in pairs; and **in that**
one of the ends of an arm (7) that composes the pair is hinged to one of said pins,
whereas one of the ends of the other arm (7) is hinged to the other of said pins.

2. GUIDE DEVICE FOR A HOLE SAW, according to claim 1, **characterized in that** the guide arms (8) are radially arranged so that their ends coincide substantially with the vertices of an imaginary regular polygon.

3. GUIDE DEVICE FOR A HOLE SAW, according to claim 1 or 2, **characterized in that** the pair of pins is composed of a fixed pin (2) with constant positioning on said central rod (1) and a mobile pin (3) with adjustable positioning on said central rod (1).

4. GUIDE DEVICE FOR A HOLE SAW, according to claim 1 or 2 or 3, **characterized in that** each of the two pins has a plurality of wings (4), at each of which one of the ends of one of said arms (7) is hinged.

5. GUIDE DEVICE FOR A HOLE SAW, according to claim 4, **characterized in that** the number (N) of wings (4) is equal to two on each pin and they are mutually radially spaced by about 180° and **in that** said wings (4) of one of the two pins are radially aligned with the wings (4) of the other pin.

6. GUIDE DEVICE FOR A HOLE SAW, according to claim 4, **characterized in that** the number (N) of wings (4) is greater than two on each pin and they are mutually radially spaced by about 360°/N and **in that** said wings (4) of one of the two pins are radially aligned with the wings (4) of the other pin.

7. GUIDE DEVICE FOR A HOLE SAW, according to any one of the preceding claims, **characterized in that** said guide bars (8) have two slots (9) arranged in the longitudinal direction.

8. GUIDE DEVICE FOR A HOLE SAW, according to any one of the preceding claims, **characterized in that** said mobile pin following the adjustment, is retained in position by a locking element (6).

9. GUIDE DEVICE FOR A HOLE SAW, according to any one of the preceding claims, **characterized in that** said central rod (1) has at least one of its ends appropriately arranged to receive coupling means with a hole saw.

## Patentansprüche

1. FÜHRUNGSVORRICHTUNG FÜR EINE LOCHSÄGE, umfassend:
- einen zentralen Stab (1);
- ein Paar Stifte, die auf dem zentralen Stab (1) geschraubt sind;
- eine Vielzahl von Armen (7);
wobei die Arme (7), die Teile eines Paares sind, im Wesentlichen radial ausgerichtet in Bezug auf den zentralen Stab (1) angeordnet sind;
wobei die Führungsvorrichtung ferner eine Vielzahl von Führungsstangen (8) der gleichen Anzahl wie die Vielzahl von Paaren von Armen (7) umfasst,
**dadurch gekennzeichnet, dass** die Vielzahl von Führungsstangen (8) mindestens einen Schlitz (9) umfasst, an dem die weiteren Enden der Paare von Armen (7) angelenkt sind,
**dadurch, dass** das Paar von Stiften mittels einer Kupplung, die ausgelegt ist, um die Veränderung ihres gegenseitigen Abstands zu ermöglichen, am zentralen Stab (1) gehalten wird,
**dadurch, dass** die Vielzahl von Armen (7) paarweise angeordnet ist
und **dadurch, dass** eines der Enden eines Arms (7), der das Paar bildet, an einem der Stifte angelenkt ist, während eines der Enden des anderen Arms (7) an dem anderen der Stifte angelenkt ist.

2. FÜHRUNGSVORRICHTUNG FÜR EINE LOCHSÄGE nach Anspruch 1, **dadurch gekennzeichnet, dass** die Führungsarme (8) radial so angeordnet sind, dass ihre Enden im Wesentlichen mit den Scheiteln eines imaginären regelmäßigen Polygons zusammenfallen.

3. FÜHRUNGSVORRICHTUNG FÜR EINE LOCHSÄGE nach Anspruch 1 oder 2, **dadurch gekennzeichnet, dass** das Paar von Stiften aus einem festen Stift (2) mit konstanter Positionierung auf dem zentralen Stab (1) und einem beweglichen Stift (3) mit einstellbarer Positionierung auf dem zentralen Stab (1) besteht.

4. FÜHRUNGSVORRICHTUNG FÜR EINE LOCHSÄGE nach Anspruch 1 oder 2 oder 3, **dadurch gekennzeichnet, dass** jeder der beiden Stifte eine Vielzahl von Flügeln (4) aufweist, an denen jeweils eines der Enden eines der Arme (7) angelenkt ist.

5. FÜHRUNGSVORRICHTUNG FÜR EINE LOCHSÄGE nach Anspruch 4, **dadurch gekennzeichnet, dass** die Anzahl (N) der Flügel (4) auf jedem Stift gleich zwei ist und sie um etwa 180° radial voneinander beabstandet sind, und **dadurch, dass** die Flügel (4) eines der beiden Stifte mit den Flügeln (4) des anderen Stiftes radial ausgerichtet sind.

6. FÜHRUNGSVORRICHTUNG FÜR EINE LOCHSÄGE nach Anspruch 4, **dadurch gekennzeichnet, dass** die Anzahl (N) der Flügel (4) auf jedem Stift größer als zwei ist und sie um etwa 360°/N radial voneinander beabstandet sind, und **dadurch, dass** die Flügel (4) eines der beiden Stifte mit den Flügeln (4) des anderen Stiftes radial ausgerichtet sind.

7. FÜHRUNGSVORRICHTUNG FÜR EINE LOCHSÄGE nach einem der vorhergehenden Ansprüche, **dadurch gekennzeichnet, dass** die Führungsstangen (8) zwei Schlitze (9) aufweisen, die in der Längsrichtung angeordnet sind.

8. FÜHRUNGSVORRICHTUNG FÜR EINE LOCHSÄGE nach einem der vorhergehenden Ansprüche, **dadurch gekennzeichnet, dass** der bewegliche Stift nach der Einstellung durch ein Verriegelungselement (6) in Position gehalten wird.

9. FÜHRUNGSVORRICHTUNG FÜR EINE LOCHSÄGE nach einem der vorhergehenden Ansprüche, **dadurch gekennzeichnet, dass** mindestens eines der Enden des zentralen Stabs (1) geeignet angeordnet ist, um Kupplungsmittel mit einer Lochsäge aufzunehmen.

## Revendications

1. DISPOSITIF DE GUIDAGE POUR UNE SCIE CLOCHE, comprenant :
- une tige centrale (1) ;
- une paire de broches filetées sur ladite tige centrale (1) ;
- une pluralité de bras (7) ;
dans lequel les bras (7) faisant partie d'une paire sont disposés sensiblement alignés radialement par rapport à la tige centrale (1) ;
le dispositif de guidage comprenant en outre une pluralité de barres de guidage (8) du même nombre que la pluralité de paires de bras (7),
**caractérisé en ce que** la pluralité de barres de guidage (8) comprend au moins une fente (9), à laquelle les extrémités supplémentaires des paires de bras (7) sont articulées,
**en ce que** , la paire de broches est maintenue sur ladite tige centrale (1) au moyen d'un couplage adapté pour permettre la variation de leur distance mutuelle,
**en ce que** la pluralité de bras (7) est disposée par paires
et **en ce que** l'une des extrémités d'un bras (7) qui compose la paire est articulée à l'une desdites broches, tandis que l'une des extrémités de l'autre bras (7) est articulée à l'autre desdites broches.

2. DISPOSITIF DE GUIDAGE POUR UNE SCIE CLOCHE, selon la revendication 1, **caractérisé en ce que** les bras de guidage (8) sont disposés radialement de manière à ce que leurs extrémités coïncident sensiblement avec les sommets d'un polygone régulier imaginaire.

3. DISPOSITIF DE GUIDAGE POUR UNE SCIE CLOCHE, selon la revendication 1 ou 2, **caractérisé en ce que** la paire de broches est composée d'une broche fixe (2) à positionnement constant sur ladite tige centrale (1) et d'une broche mobile (3) à positionnement réglable sur ladite tige centrale (1).

4. DISPOSITIF DE GUIDAGE POUR UNE SCIE CLOCHE, selon la revendication 1 ou 2 ou 3, **caractérisé en ce que** chacune des deux broches a une pluralité d'ailes (4), à chacune desquelles s'articule l'une des extrémités de l'un desdits bras (7).

5. DISPOSITIF DE GUIDAGE POUR UNE SCIE CLOCHE, selon la revendication 4, **caractérisé en ce que** le nombre (N) d'ailes (4) est égal à deux sur chaque broche et elles sont mutuellement espacées radialement d'environ 180° et **en ce que** lesdites ailes (4) de l'une des deux broches sont alignées radialement avec les ailes (4) de l'autre broche.

6. DISPOSITIF DE GUIDAGE POUR UNE SCIE CLOCHE, selon la revendication 4, **caractérisé en ce que** le nombre (N) d'ailes (4) est supérieur à deux sur chaque broche et qu'elles sont mutuellement espacées radialement d'environ 360°/N et **en ce que** lesdites ailes (4) de l'une des deux broches sont alignées radialement avec les ailes (4) de l'autre broche.

7. DISPOSITIF DE GUIDAGE POUR UNE SCIE CLOCHE, selon l'une quelconque des revendications précédentes, **caractérisé en ce que** lesdites barres de guidage (8) ont deux fentes (9) disposées dans la direction longitudinale.

8. DISPOSITIF DE GUIDAGE POUR UNE SCIE CLOCHE, selon l'une quelconque des revendications précédentes, **caractérisé en ce que** ladite broche mobile après le réglage, est maintenue en position par un élément de verrouillage (6).

9. DISPOSITIF DE GUIDAGE POUR UNE SCIE CLOCHE, selon l'une quelconque des revendications précédentes, **caractérisé en ce que** ladite tige centrale (1) a au moins une de ses extrémités convenablement disposée pour recevoir des moyens de couplage avec une scie cloche.
